# EUROPEAN PATENT APPLICATION

(11) **EP 2 482 571 A1**
(43) Date of publication of application: **01.08.2012**
(21) Application number: 10827821.9
(22) Date of filing: 28.06.2010
(51) Int. Cl.: H04W 8/02, H04W 12/06, H04W 88/08

(54) **POSITION LOCKING METHOD AND SYSTEM OF USER NETWORK EQUIPMENT**

(30) Priority: 05.11.2009 CN 200910174482
(71) Applicant: ZTE Corporation, Shenzhen, Guangdong 518057 (CN)
(72) Inventor: ZHU, Li, Guangdong 518057 (CN); JIANG, Liang, Guangdong 518057 (CN); GAN, Lu, Guangdong 518057 (CN)
(74) Representative: Krauns, Christian
(86) International application number: PCT/CN2010/074599
(87) International publication number: WO 2011/054207

(57) **Abstract**

The present invention discloses a method for locking a location of user network equipment, and the method includes: after the user network equipment accesses a network, a user access line identification information verifying node judging whether a location identifier of the user network equipment is valid or not according to user access line identification information of the user network equipment stored in a trusted node and the user access line identification information of the user network equipment acquired from a remote authentication dial-in user service server or a broadband remote access server or a service router. The present invention also provides a system for locking a location of user network equipment and a user access line identification information verifying node. The present invention can improve the existing location locking mechanism of H(e)NB, enhances the reliability and security of the H(e)NB location locking, and solves a plurality of inconveniences and threads caused by use of the H(e)NB in an illegal location in practical applications.

## Description

### Technical Field

The present invention relates to the wireless communication technology field, and more specifically, is used to re-lock a new location of user network equipment such as a Home (Evolved) NodeB (referred to as H(e)NB) and so on, in a Universal Mobile Telephone System (referred to as UMTS) network and a security architecture of an Evolved Packet System (referred to as EPS).

### Background of the Related Art

A HNB is used to provide third generation mobile communication system (3G) mobile phones in homes with 3G radio coverage, and is connected to an existing residential broadband service, and comprises functions of a standard Node of B (Node B, an element of 3G macro wireless access network) and radio resource management functions of a standard radio network controller (referred to as RNC).

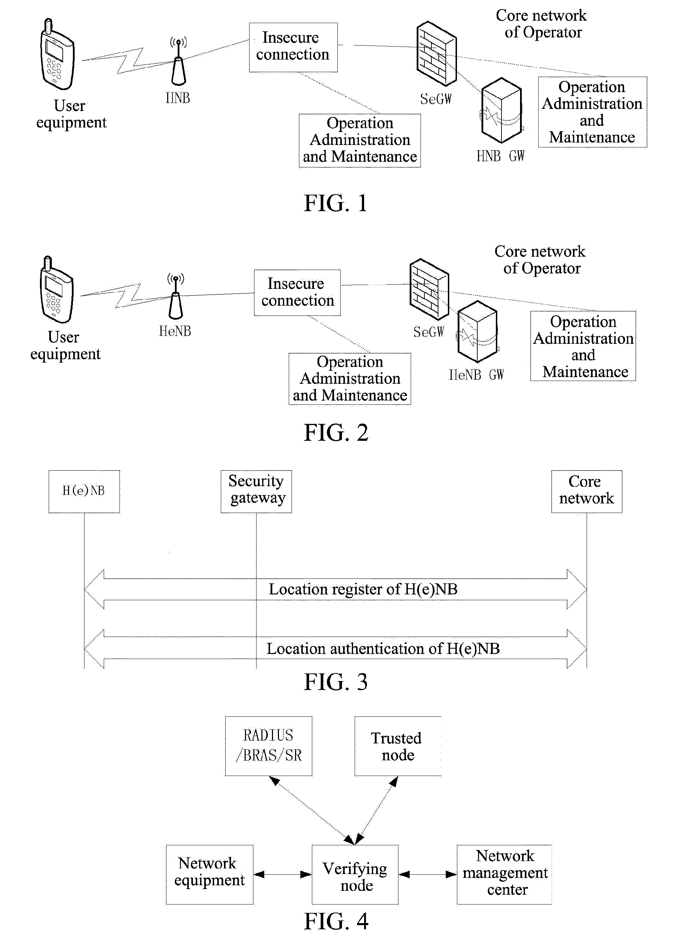

FIG. 1 illustrates a system structure of the HNB, wherein, the interface between user equipment and a Home Node-B (referred to as HNB) of the 3rd Generation Partnership Project (referred to as 3GPP) is an air interface of the backhaul and compatibility in a Universal Terrestrial Radio Access Network (referred to as UTRAN). The HNB accesses a core network of an operator via a Security Gateway (referred to as SeGW), wherein, the broadband Internet Protocol (IP) backhaul between the HNB and the SeGW may be unsafe, therefore, the information broadcasted in the backhaul needs to be protected by a security channel established between the HNB and the SeGW. The SeGW, on behalf of the operator core network, performs mutual authentications with the HNB. The HNB gateway and the SeGW are logically detached entities within the operator core network, and are used to perform an access control of User Equipment (referred to as UE) of a non-Closed Subscriber Group (referred to as CSG). Operation, Administration and Maintenance (referred to as OAM) needs a secure communication, especially when being located outside the operator network.
FIG. 2 illustrates a system structure of a Home evolved Node-B (referred to as HeNB). The difference between the HeNB and the HNB is that the HeNB is an air interface connecting 3GPP user equipment with an Evolved Universal Terrestrial Radio Access Network (referred to as EUTRAN).

A H(e)NB (Home (evolved) Node-B) includes a HNB and a HeNB, and is a general name for a HNB and a HeNB.

For the security of a H(e)NB, 27 kinds of threats are defined in 3GPP TR 33.820. These 27 kinds of threats are grouped into seven categories, which respectively are: dangers to H(e)NB qualifications, physical attacks on the H(e)NB, attacks on the structure of H(e)NB, attacks on the protocol of the H(e)NB, attacks on a core network (including attacks based on the H(e)NB location), attacks on data and identity privacy of a user, as well as attacks on the radio resources and management.

Among the 27 kinds of threats defined in 3GPP TR 33.820, the attacks based on the H(e)NB location is correlated with operating the H(e)NB in an inappropriate location. For the attacks based on the H(e)NB location, a location locking mechanism is provided in 3GPP TR 33.820 to overcome the attacks based on the H(e)NB location, and the location locking mechanism mainly comprises the following two steps: a H(e)NB location registration, a H(e)NB location authentication. FIG. 3 shows the H(e)NB location locking mechanism defined in 3GPP TR 33.820 to be used to overcome the attacks based on the H(e)NB location. However, for the extensiveness and flexibility of H(e)NB applications, the location locking mechanism is far from perfect, and currently no other solutions are provided for the H(e)NB location locking in the relevant specifications.

In the existing H(e)NB location locking mechanism, the H(e)NB location information needs to be reported to a verifying node via the H(e)NB, while the H(e)NB itself is insecure user network equipment, and its own security threads has not been properly resolved, therefore the information transmitted by the H(e)NB is inevitably forged or tampered. For example, in the H(e)NB location locking solution based on the IP address, , a proxy server can easily use the same IP address as the H(e)NB to pose the reasonably registered H(e)NB, so as to perform proxy attacks, after the location based on the IP address of the H(e)NB is moved. If the H(e)NB location cannot be locked by a security location locking mechanism, the H(e)NB will not be configured with a plurality of parameters or be used normally. The location of an emergency call issued from the H(e)NB will not be determined reliably, or sent to a correct emergency call center. The legal listening to the location report will also became impossible. Without a reliable location locking mechanism, users are able to use the H(e)NB in an unauthorized area, especially in a foreign country, which will result in a significant loss of the operator.

The used user access line identification information is acquired by a Broadband Remote Access Server/Service Router (referred to as BRAS/SR), after the user network equipment (including the H(e)NB) is started. The user access line identification information comprises a user identifier and an identifier of the used access line. The BRAS/SR sends the user access line identification information to a Remote Authentication Dial-in User Service (referred to as RADIUS) server. The RADIUS server authenticates the user access line identification information. And the aforementioned user access line identification function can be used to trace the physical location where the user accesses the internet.

### Summary of the Invention

Based on the aforementioned analysis of the defects of the existing technology, a security H(e)NB location locking mechanism based on user access line identification information needs to be introduced to overcome the threat caused by its operation in an inappropriate position.

The technical problem to be solved by the present invention is to provide a method for locking a location of user network equipment, a system for locking a location and a user access line identification information verifying node, so as to increase the reliability and security of the location locking of the user network equipment.

In order to solve the aforementioned problem, the present invention provides a method for locking a location of user network equipment, and the method comprises: after the user network equipment accesses a network, a user access line identification information verifying node judging whether a location identifier of the user network equipment is valid or not according to user access line identification information of the user network equipment stored in a trusted node and user access line identification information of the user network equipment acquired from a remote authentication dial-in user service server or a broadband remote access server or a service router.

The step of judging whether the location identifier of the user network equipment is valid or not comprises:
the trusted node storing the user access line identification information of the user network equipment configured by an operator;
the user access line identification information verifying node acquiring the user access line identification information of the user network equipment from the trusted node, and stores the user access line identification information as the current location identifier of the user network equipment; and
the user access line identification information verifying node comparing the current location identifier with the user access line identification information of the user network equipment acquired from the remote authentication dial-in user service server or the broadband remote access server or the service router, if the comparison result is "the same", judging the location identifier of the user network equipment to be valid; if the comparison result is "not the same", judging the location identifier of the user network equipment to be invalid.

After the step of judging the location identifier of the user network equipment is invalid, the method further comprises:
the user access line identification information verifying node sending the user access line identification information of the user network equipment acquired from the remote authentication dial-in user service server or the broadband remote access server or the service router to a network management center, which determines whether the location identifier of the user network equipment is valid or not.

After the step of the network management center determining whether the location identifier of the user network equipment is valid or not, the method further comprises:
after receiving the user access line identification information, the network management center registering the location identifier based on the user access line identification information in a database of the trusted node, when determining that the user access line identification information is valid; and the user access line identification information verifying node storing the user access line identification information and taking the user access line identification information as the current location identifier of the user network equipment.

After the step of the network management center determining whether the location identifier of the user network equipment is valid or not, the method further comprises:
after receiving the user access line identification information, the network management center judging that the current location identifier of the user network equipment is invalid, when determining that the user access line identification information is invalid.

The user network equipment refers to a Home Node-B or a Home evolved Node-B;
the trusted node refers to Connectivity Session Location and Repository Function;
the user access line identification information verifying node refers to a Home Node-B or a Home evolved Node-B or a Home Node-B gateway or a Home evolved Node-B gateway or a mobile management entity or any other gateway possessing a location verifying function in a core network.

In order to solve the aforementioned technical problem, the present invention also provides a system for locking a location of user network equipment, and the system comprises user network equipment, a trusted node and a user access line identification information verifying node;
the user access line identification information verifying node is configured: to judge whether a location identifier of the user network equipment is valid or not, according to user access line identification information of the user network equipment stored in the trusted node and the user access line identification information of the user network equipment acquired from a remote authentication dial-in user service server or a broadband remote access server or a service router, after the user network equipment accesses a network.

The user access line identification information of the user network equipment stored in trusted node is the user access line identification information of the user network equipment configured by an operator;
the user access line identification information verifying node is configured to judge whether the location identifier of the user network equipment is valid or not in the following way of: acquiring the user access line identification information of the user network equipment from the trusted node, and storing the user access line identification information as the current location identifier of the user network equipment; and comparing the current location identifier with the user access line identification information of the user network equipment acquired from the remote authentication dial-in user service server or the broadband remote access server or the service router, if the comparison result being "the same", judging the location identifier of the user network equipment to be valid; if the comparison result being "not the same", judging the location identifier of the user network equipment to be invalid.

The system further comprises a network management center;
the user access line identification information verifying node is further configured: to send the user access line identification information of the user network equipment acquired from the remote authentication dial-in user service server or the broadband remote access server or the service router to the network management center, when the comparison result is "not the same";
the network management center is configured: to determine whether the location identifier of the user network equipment is valid or not; to register the location identifier based on the user access line identification information in a database of the trusted node, if determining that the user access line identification information is valid; to judge the current location identifier of the user network equipment to be invalid, if determining that the user access line identification information is invalid;
the user access line identification information verifying node is further configured: to store the user access line identification information as the current location identifier of the user network equipment, when the network management center determines that the user access line identification information is valid.

The user network equipment refers to a Home Node-B or a Home evolved Node-B; the trusted node refers to Connectivity Session Location and Repository Function; the user access line identification information verifying node refers to a Home Node-B or a Home evolved Node-B or a Home Node-B gateway or a Home evolved Node-B gateway or a mobile management entity or any other gateway possessing a location verifying function in a core network.

In order to solve the aforementioned technical problem, the present invention also provides a user access line identification information verifying node, and the verifying node is configured: to judge whether a location identifier of user network equipment is valid or not, according to user access line identification information of the user network equipment stored in a trusted node and the user access line identification information of the user network equipment acquired from a remote authentication dial-in user service server or a broadband remote access server or a service router, after the user network equipment accesses a network.

The user access line identification information of the user network equipment stored in trusted node is the user access line identification information of the user network equipment configured by an operator;
the user access line identification information verifying node is configured to judge whether a location identifier of the user network equipment is valid or not in the following way of: acquiring the user access line identification information of the user network equipment from the trusted node, and storing the user access line identification information as the current location identifier of the user network equipment; and comparing the current location identifier with the user access line identification information of the user network equipment acquired from the remote authentication dial-in user service server or the broadband remote access server or the service router, if the comparison result being "the same", judging the location identifier of the user network equipment to be valid; if the comparison result being "not the same", judging the location identifier of the user network equipment to be invalid.

The user access line identification information verifying node is further configured: to send the user access line identification information of the user network equipment acquired from the remote authentication dial-in user service server or the broadband remote access server or the service router to the network management center, when the comparison result is "not the same",
so that the network management center determines whether the location identifier of the user network equipment is valid or not.

The user access line identification information verifying node is further configured: to store the user access line identification information as the current location identifier of the user network equipment, when the network management center determines that the user access line identification information is valid after receiving the user access line identification information.

The user network equipment comprises a Home Node-B or a Home evolved Node-B;
the trusted node comprises Connectivity Session Location and Repository Function;
the user access line identification information verifying node comprises a Home Node-B or a Home evolved Node-B or a Home Node-B gateway or a Home evolved Node-B gateway or a mobile management entity or any other gateway possessing a location verifying function in a core network.

Applications of the present invention can improve the existing H(e)NB location locking mechanism, enhance the reliability and security of the H(e)NB location locking, thus solving a plurality of inconveniences and threads caused by use of the H(e)NB in an illegal location in practical applications.

### Brief Description of Drawings

FIG. 1 is a system structure of a HNB in the existing technology;
FIG. 2 is a system structure of a HeNB in the existing technology;
FIG. 3 is a H(e)NB location locking mechanism defined in 3GPP TR 33.820 in the existing technology;
FIG. 4 is a structural diagram of a location locking system of a Home Node-B in accordance with an embodiment of the present invention;
FIG. 5 is a flow chart of a method for locking a location of user network equipment in accordance with an embodiment of the present invention;
FIG. 6 is a flow chart of a method for locking a location of user network equipment in accordance with the first specific embodiment of the present invention;
FIG. 7 is a flow chart of a method for locking a location of user network equipment in accordance with the second specific embodiment of the present invention;
FIG. 8 is a flow chart of a method for locking a location of user network equipment in accordance with the third specific embodiment of the present invention;
FIG. 9 is a flow chart of a method for locking a location of user network equipment in accordance with the fourth specific embodiment of the present invention.

### Preferred Embodiments of the Present Invention

In order to meet the requirement for performing a security location locking of user network equipment, the present invention provides the following mechanism for locking the location of the user network equipment based on user access line identification information to implement a security location locking of the user network equipment. The user network equipment comprises a Home Node-B and a Home evolved Node-B, and the present invention is typically applicable to a Home Node-B and a Home evolved Node-B.

As shown in FIG. 4, a system for locking a location of user network equipment comprises user network equipment, a user access line identification information verifying node (or referred to as a verifying node), a network management center, and a remote authentication dial-in user service server or a broadband remote access server or a service router (RADIUS/BRAS/SR) as well as a trusted node which are connected with the verifying node. Wherein, the user network equipment comprises a Home Node-B (HNB) or a Home evolved Node-B (HeNB). The trusted node comprises a Connectivity Session Location and Repository Function (referred to as CLF); the verifying node comprises a Home Node-B management system or a Home evolved Node-B management system or a Home Node-B or a Home evolved Node-B or a Home Node-B gateway or a Home evolved Node-B gateway or a mobile management entity or any other gateway possessing a location verifying function in a core network.

The verifying node is configured: to judge whether a location identifier of the user network equipment is valid or not, according to the user access line identification information of the user network equipment stored in a trusted node and the user access line identification information of the user network equipment acquired from a RADIUS/BRAS/SR, after the user network equipment accesses a network; specifically, to acquire the user access line identification information of the user network equipment from the trusted node, and to store it as the current location identifier of the user network equipment; and then to compare the current location identifier with the user access line identification information of the user network equipment acquired from the RADIUS/BRAS/SR, if the comparison result being "the same", to judge the location identifier of the user network equipment to be valid, if the comparison result being "not the same", to judge the location identifier of the user network equipment to be invalid; further to send the user access line identification information of the user network equipment acquired from the RADIUS/BRAS/SR to the network management center. The verifying node stores the user access line identification information and takes it as the current location identifier of the user network equipment, when the network management center determines that the user access line identification information is valid.

The trusted node is configured: to store the user access line identification information of the user network equipment configured by an operator.

The network management center is configured: to determine whether the location identifier of the user network equipment is valid or not; to register the location identifier based on the user access line identification information in a database of the trusted node, if determining that the user access line identification information is valid after receiving the user access line identification information; to judge the current location identifier of the user network equipment to be invalid, if determining that the user access line identification information is invalid.

The embodiment also provides a user access line identification information verifying node, which is configured:
to judge whether a location identifier of the user network equipment is valid or not, according to the user access line identification information of the user network equipment stored in a trusted node and the user access line identification information of the user network equipment acquired from a remote authentication dial-in user service server or a broadband remote access server or a service router, after the user network equipment accesses a network.

The user access line identification information of the user network equipment stored in trusted node is the user access line identification information of the user network equipment configured by an operator;
the user access line identification information verifying node is configured to judge whether a location identifier of the user network equipment is valid or not in the following way of: acquiring the user access line identification information of the user network equipment from the trusted node, and storing it as the current location identifier of the user network equipment; and comparing the current location identifier with the user access line identification information of the user network equipment acquired from a remote authentication dial-in user service server or a broadband remote access server or a service router, if the comparison result being "the same", judging the location identifier of the user network equipment to be valid; if the comparison result being "not the same", judging the location identifier of the user network equipment to be invalid.

The user access line identification information verifying node is further configured: to send the user access line identification information of the user network equipment acquired from the remote authentication dial-in user service server or the broadband remote access server or the service router to the network management center, when the comparison result is "not the same",
so as to make the network management center determine whether the location identifier of the user network equipment is valid or not.

The user access line identification information verifying node is further configured: to store the user access line identification information as the current location identifier of the user network equipment, when the network management center determines that the user access line identification information is valid after receiving the user access line identification information.

The user network equipment comprises a Home Node-B or a Home evolved Node-B;
the trusted node comprises Connectivity Session Location and Repository Function;
the user access line identification information verifying node comprises a Home Node-B or a Home evolved Node-B or a Home Node-B gateway or a Home evolved Node-B gateway or a mobile management entity or any other gateway possessing a location verifying function in a core network.

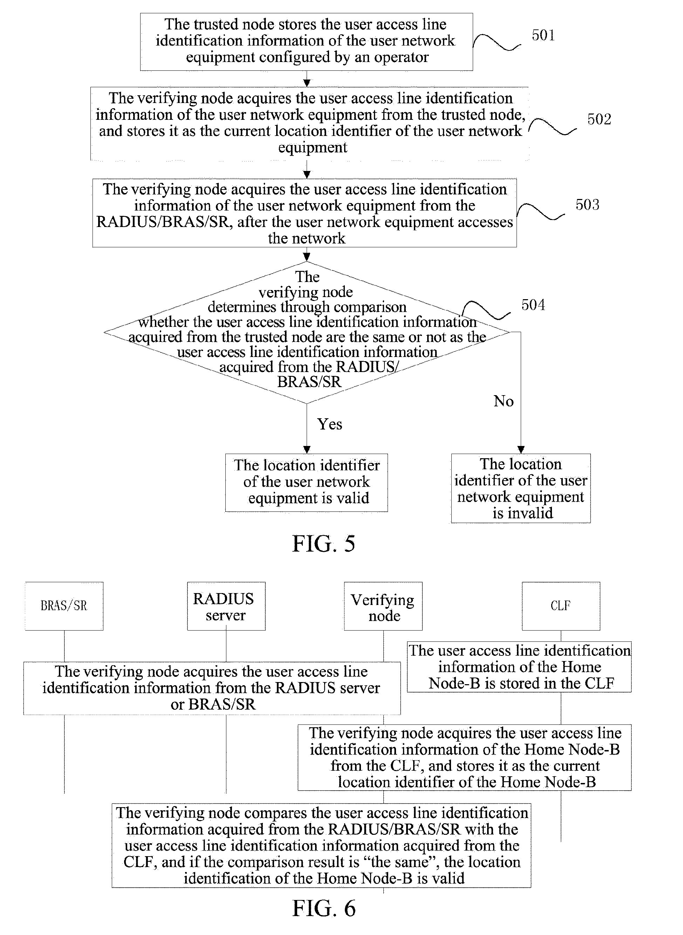

As shown in FIG. 5, the method for locking a location of the user network equipment comprises the following steps:
In step 501, the trusted node stores the user access line identification information of the user network equipment configured by an operator.

The trusted node comprises Connectivity Session Location and Repository Function (CLF), and the user network equipment comprises a Home Node-B and a Home evolved Node-B.

In step 502, the verifying node acquires the user access line identification information of the user network equipment from the trusted node, and stores it as a current location identifier of the user network equipment.

The verifying node comprises a Home Node-B management system or a Home evolved Node-B management system or a Home Node-B or a Home evolved Node-B or a Home Node-B gateway or a Home evolved Node-B gateway or a mobile management entity or any other gateway possessing a location verifying function in a core network.

In step 503, the verifying node acquires the user access line identification information of the user network equipment from the RADIUS/BRAS/SR, after the user network equipment accesses the network.

In step 504, the verifying node compares the user access line identification information acquired from the trusted node with the user access line identification information acquired from the RADIUS/BRAS/SR, if the comparison result is "the same", the location identifier of the user network equipment is judged to be valid; if the comparison result is "not the same", the location identifier of the user network equipment is judged to be invalid.

In the step 504 of the aforementioned method, when the comparison result of the verifying node is "not the same", the user access line identification information of the user network equipment acquired from the RADIUS/BRAS/SR is sent to the network management center, which determines whether the location identifier of the user network equipment is valid or not, specifically, determines by the operator through verifying whether the user access line belongs to the scope of its operating or not. After receiving the user access line identification information, the network management center registers the location identifier based on the user access line identification information in a database of the trusted node, when determining the user access line identification information is valid; and the verifying node stores the user access line identification information and takes it as the current location identifier of the user network equipment. The network management center judges the current location identifier is invalid, when determining that the user access line identification information is invalid.

The present invention will be illustrated with specific embodiments hereinafter. The following specific embodiments are described by taking as an example a Home Node-B, and in other implementation process, can be also applicable to a Home evolved Node-B and other user network equipment.

In the first specific embodiment, the method for locking a Home Node-B based on the user access line identification information comprises the following steps, with reference to FIG. 6.

The user access line identification information of the Home Node-B is stored in the CLF.

The verifying node acquires the user access line identification information from the RADIUS/BRAS/SR when the Home Node-B accesses.

The verifying node acquires the user access line identification information of the Home Node-B from the CLF, and stores it as the current location identifier of the Home Node-B.

The verifying node compares the user access line identification information sent by the RADIUS server or BRAS/SR with the user access line identification information of the Home Node-B acquired from the CLF, and if the comparison result is "the same", the location identifier of the Home Node-B is valid.

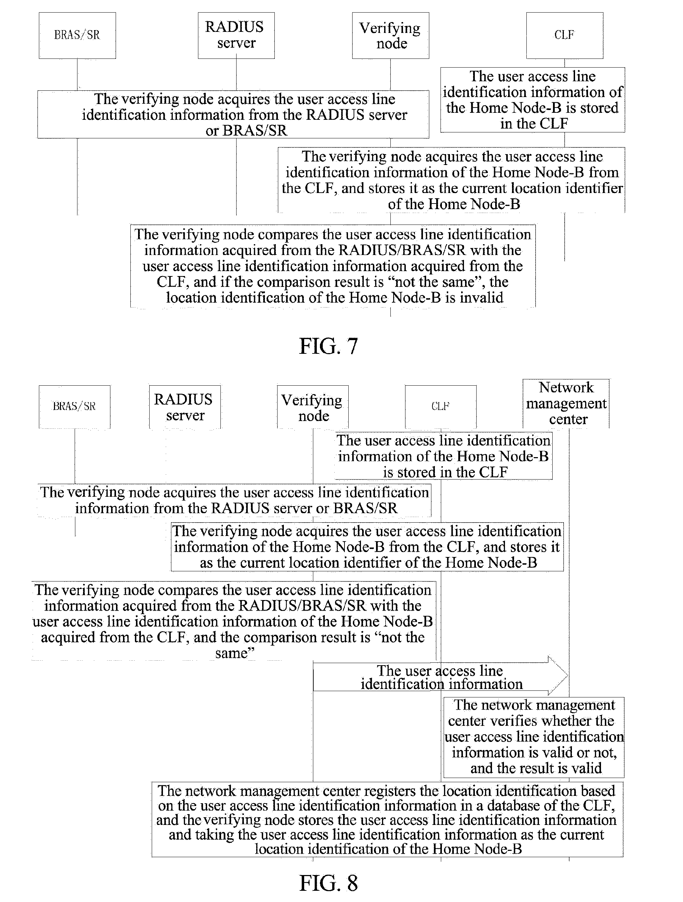

In the second specific embodiment, the method for locking a Home Node-B based on the user access line identification information comprises the following steps, with reference to FIG. 7.

The user access line identification information of the Home Node-B is stored in the CLF.

The verifying node acquires the user access line identification information from the RADIUS/BRAS/SR when the Home Node-B accesses.

The verifying node acquires the user access line identification information of the Home Node-B from the CLF, and stores it as the current location identifier of the Home Node-B.

The verifying node compares the user access line identification information sent by the RADIUS server or BRAS/SR with the user access line identification information of the Home Node-B from the CLF, and if the comparison result is "not the same", the location identifier of the Home Node-B is invalid.

In the third specific embodiment, the method for locking a Home Node-B based on the user access line identification information comprises the following steps, with reference to FIG. 8.

The user access line identification information of the Home Node-B is stored in the CLF.

The verifying node acquires the user access line identification information from the RADIUS/BRAS/SR when the Home Node-B accesses.

The verifying node acquires the user access line identification information of the Home Node-B from the CLF, and stores it as the current location identifier of the Home Node-B.

The verifying node compares the user access line identification information sent by the RADIUS server or BRAS/SR with the user access line identification information of the Home Node-B from the CLF, and the comparison result is "the same".

The verifying node sends the user access line identification information to the network management center.

The network management center verifies whether the user access line identification information is valid or not after receiving the user access line identification information, and judges that the location identifier of the Home Node-B is valid if the verifying result is "valid";
the network management center registers the location identifier based on the user access line identification information in a database of the CLF, and the verifying node stores the user access line identification information and takes it as the current location identifier of the Home Node-B.

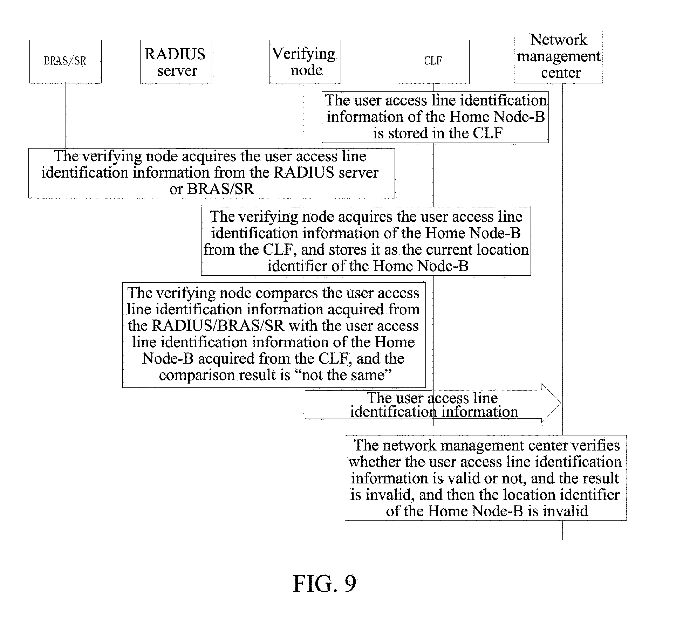

In the fourth specific embodiment, the method for locking a Home Node-B based on the user access line identification information comprises the following steps, with reference to FIG. 9.

The user access line identification information of the Home Node-B is stored in the CLF.

The verifying node acquires the user access line identification information from the RADIUS/BRAS/SR when the Home Node-B accesses.

The verifying node acquires the user access line identification information of the Home Node-B from the CLF, and stores it as the current location identifier of the Home Node-B.

The verifying node compares the user access line identification information sent by the RADIUS server or BRAS/SR with the user access line identification information of the Home Node-B acquired from the CLF, and the comparison result is "the same".

The verifying node sends the user access line identification information to the network management center.

The network management center verifies whether the user access line identification information is valid or not after receiving the user access line identification information, and judges that the location identifier of the Home Node-B is invalid if the verifying result is "invalid".

Those skilled in the field should understand that all or parts of steps of the aforementioned method can be completed by programs instructing the corresponding hardware, and the programs might be stored in a computer readable storage medium, such as a read-only memory, a disk, or a CD-ROM and so on. Alternatively, all or parts of steps of the aforementioned embodiments can be implemented with one or more integrated circuits. Correspondingly, each module or unit can be implemented in the form of hardware, as well as software functional modules. The present invention is not limited to any specific combinations of hardware and software.

Finally, it should be illustrated that the aforementioned embodiments are only used to describe the invention rather than to limit the present invention. If the present invention is modified or equivalently replaced without departing from the spirit and scope of the present invention, all modifications, equivalents and variations should belong to the scope of the claims of the present invention.

### Industrial Applicability

Applications of the present invention can improve the existing H(e)NB location locking mechanism, enhance the reliability and security of the H(e)NB location locking, thus solving a plurality of inconveniences and threads caused by use of the H(e)NB in an illegal location in practical applications.

## Claims

1. A method for locking a location of user network equipment, comprising:
after the user network equipment accesses a network, a user access line identification information verifying node judging whether a location identifier of the user network equipment is valid or not, according to user access line identification information of the user network equipment stored in a trusted node and the user access line identification information of the user network equipment acquired from a remote authentication dial-in user service server or a broadband remote access server or a service router.

2. The method of claim 1, wherein, the step of judging whether the location identifier of the user network equipment is valid or not comprises:
the trusted node storing the user access line identification information of the user network equipment configured by an operator;
the user access line identification information verifying node acquiring the user access line identification information of the user network equipment from the trusted node, and storing the user access line identification information as a current location identifier of the user network equipment; and
the user access line identification information verifying node comparing the current location identifier with the user access line identification information of the user network equipment acquired from the remote authentication dial-in user service server or the broadband remote access server or the service router, if a comparison result is "the same", judging the location identifier of the user network equipment to be valid; if the comparison result is "not the same", judging the location identifier of the user network equipment to be invalid.

3. The method of claim 2, wherein, after the step of judging the location identifier of the user network equipment is invalid, the method further comprises:
the user access line identification information verifying node sending the user access line identification information of the user network equipment acquired from the remote authentication dial-in user service server or the broadband remote access server or the service router to a network management center, which determines whether the location identifier of the user network equipment is valid or not.

4. The method of claim 3, wherein, after the step of the network management center determining whether the location identifier of the user network equipment is valid or not, the method further comprises:
after receiving the user access line identification information, the network management center registering the location identifier based on the user access line identification information in a database of the trusted node, when the network management center determines that the user access line identification information is valid; and the user access line identification information verifying node storing the user access line identification information and taking the user access line identification information as the current location identifier of the user network equipment.

5. The method of claim 3, wherein, after the step of the network management center determining whether the location identifier of the user network equipment is valid or not, the method further comprises:
after receiving the user access line identification information, the network management center judging that the current location identifier of the user network equipment is invalid, when determining that the user access line identification information is invalid.

6. The method of any of claims 1 to 5, wherein:
the user network equipment comprises a Home Node-B or a Home evolved Node-B;
the trusted node comprises a Connectivity Session Location and Repository Function;
the user access line identification information verifying node comprises a Home Node-B or a Home evolved Node-B or a Home Node-B gateway or a Home evolved Node-B gateway or a mobile management entity or any other gateway with a location verifying function in a core network.

7. A system for locking a location of user network equipment, comprising user network equipment, a trusted node and a user access line identification information verifying node; wherein:
the user access line identification information verifying node is configured to: judge whether a location identifier of the user network equipment is valid or not, according to user access line identification information of the user network equipment stored in a trusted node and the user access line identification information of the user network equipment acquired from a remote authentication dial-in user service server or a broadband remote access server or a service router, after the user network equipment accesses a network.

8. The system of claim 7, wherein:
the user access line identification information of the user network equipment stored in trusted node is the user access line identification information of the user network equipment configured by an operator;
the user access line identification information verifying node is configured to judge whether a location identifier of the user network equipment is valid or not in the following way: acquiring the user access line identification information of the user network equipment from the trusted node, and storing the user access line identification information as the current location identifier of the user network equipment; and comparing the current location identifier with the user access line identification information of the user network equipment acquired from a remote authentication dial-in user service server or a broadband remote access server or a service router, if a comparison result is "the same", judging the location identifier of the user network equipment to be valid; if the comparison result is "not the same", judging the location identifier of the user network equipment to be invalid.

9. The system of claim 8, further comprising a network management center; wherein,
the user access line identification information verifying node is further configured to: send the user access line identification information of the user network equipment acquired from the remote authentication dial-in user service server or the broadband remote access server or the service router to the network management center, when the comparison result is "not the same";
the network management center is configured to: determine whether the location identifier of the user network equipment is valid or not; register the location identifier based on the user access line identification information in a database of the trusted node when determining that the user access line identification information is valid; judge the current location identifier of the user network equipment to be invalid when determining that the user access line identification information is invalid;
the user access line identification information verifying node is further configured to: store the user access line identification information and take the user access line identification information as the current location identifier of the user network equipment, when the network management center determines that the user access line identification information is valid.

10. The system of any of claims 7 to 9, wherein:
the user network equipment comprises a Home Node-B or a Home evolved Node-B;
the trusted node comprises a Connectivity Session Location and Repository Function;
the user access line identification information verifying node comprises a Home Node-B or a Home evolved Node-B or a Home Node-B gateway or a Home evolved Node-B gateway or a mobile management entity or any other gateway with a location verifying function in a core network.

11. A user access line identification information verifying node, configured to: judge whether a location identifier of user network equipment is valid or not, according to user access line identification information of the user network equipment stored in a trusted node and the user access line identification information of the user network equipment acquired from a remote authentication dial-in user service server or a broadband remote access server or a service router, after the user network equipment accesses a network.

12. The user access line identification information verifying node of claim 11, wherein:
the user access line identification information of the user network equipment stored in trusted node is the user access line identification information of the user network equipment configured by an operator;
the user access line identification information verifying node is configured to judge whether a location identifier of the user network equipment is valid or not in the following way: acquiring the user access line identification information of the user network equipment from the trusted node, and storing the user access line identification information as the current location identifier of the user network equipment; and comparing the current location identifier with the user access line identification information of the user network equipment acquired from the remote authentication dial-in user service server or the broadband remote access server or the service router, if a comparison result is "the same", judging the location identifier of the user network equipment to be valid; if the comparison result is "not the same", judging the location identifier of the user network equipment to be invalid.

13. The user access line identification information verifying node of claim 12, wherein:
the user access line identification information verifying node is further configured to: send the user access line identification information of the user network equipment acquired from the remote authentication dial-in user service server or the broadband remote access server or service router to a network management center, when the comparison result is not the same,
so that the network management center determines whether the location identifier of the user network equipment is valid or not.

14. The user access line identification information verifying node of claim 13, wherein:
the user access line identification information verifying node is further configured to: store the user access line identification information and take the user access line identification information as the current location identifier of the user network equipment, when the network management center determines that the user access line identification information is valid after receiving the user access line identification information.

15. The user access line identification information verifying node of any of claims 13 to 14, wherein:
the user network equipment comprises a Home Node-B or a Home evolved Node-B;
the trusted node comprises a Connectivity Session Location and Repository Function;
the user access line identification information verifying node comprises a Home Node-B or a Home evolved Node-B or a Home Node-B gateway or a Home evolved Node-B gateway or a mobile management entity or other gateway with a location verifying function in a core network.
